# EUROPÄISCHE PATENTSCHRIFT

(11) **EP 4 346 363 B1**
(45) Veröffentlichungstag und Bekanntmachung des Hinweises auf die Patenterteilung: **17.06.2026**
(21) Anmeldenummer: 22730210.6
(22) Anmeldetag: 23.05.2022
(51) Int. Cl.: A01B 15/14, A01B 23/04, A01B 71/04, A01C 7/20

(54) **LANDWIRTSCHAFTLICHE ARBEITSMASCHINE**
AGRICULTURAL MACHINE
MACHINE AGRICOLE

(30) Priorität: 01.06.2021 DE 102021114108
(43) Veröffentlichungstag der Anmeldung: 10.04.2024
(73) Patentinhaber: Amazonen-Werke H. Dreyer SE & Co. KG, 49205 Hasbergen (DE)
(72) Erfinder: BOROVAC, Danijel, 26127 Oldenburg (DE)
(86) Internationale Anmeldenummer: PCT/EP2022/063861
(87) Internationale Veröffentlichungsnummer: WO 2022/253608

(56) Entgegenhaltungen:
- EP-A1- 3 649 841
- DE-A1- 102014 111 136

## Beschreibung

Die Erfindung betrifft eine landwirtschaftliche Arbeitsmaschine gemäß dem Oberbegriff des Patentanspruches 1.

Auf dem Gebiet der Landwirtschaft sind eine Vielzahl von Varianten gezogener, angebauter und/oder selbstfahrender Arbeitsmaschinen bekannt. Hierzu zählen neben Sämaschinen, die dazu geeignet sind, Verteilgut, insbesondere Saatgut und/oder Dünger, auf der landwirtschaftlichen Nutzfläche auszubringen, unter anderem auch Bodenbearbeitungsmaschinen mittels denen der Ackerboden derartiger Nutzflächen vor- und/oder nachbereitet werden kann. Darüber hinaus gehören hierzu auch Bestellkombinationen, bestehend aus einer Sämaschine und einer Bodenbearbeitungsmaschine, welche dazu eingerichtet sind, die Verteilgutausbringung und die Ackerbodenbearbeitung zu kombinieren. Um das Verteilgut entsprechend auf der Nutzfläche auszubringen bzw. die Nutzfläche entsprechend zu bearbeiten, weisen derartige landwirtschaftliche Arbeitsmaschinen wenigstens ein hierfür geeignetes Arbeitswergzeug auf, welches in geeigneter Weise mit einem Tragrahmen des Arbeitsgeräts gekoppelt ist.

Gattungsgemäße Arbeitswerkzeuge sind dabei je nach Stellung der Arbeitsmaschine, insbesondere zwischen einer Arbeits- und/oder Transportstellung, und/oder je nach benötigter Arbeits- bzw. Eindringtiefe zumindest teilweise auf unterschiedlichen Höhen positionierbar und/oder verbringbar. Hierfür sind derartige Arbeitswerkzeuge, insbesondere in einer Mehrzahl quer zu einer Fahrtrichtung der Arbeitsmaschine gesehen, mittels wenigstens einem mit der Arbeitsmaschine gekoppelten, insbesondere gemeinsamen, Querbalken in der Höhe, Lage und/oder Ausrichtung verstellbar angeordnet.

Eine gattungsgemäße Arbeitsmaschine ist beispielsweise in der EP 3 649 841 A1 beschrieben. Die Arbeitsmaschine umfasst dabei zumindest einen der Arbeitsmaschine zugeordneten Tragrahmen mit wenigstens einer Aufnahme für wenigstens einen im Wesentlichen quer zu einer Fahrtrichtung der Arbeitsmaschine ausgerichteten Querbalken. Des Weiteren umfasst die Arbeitsmaschine wenigstens eine, insbesondere mehrteilige, Lagervorrichtung über die der Querbalken zumindest teilweise verdrehbar um seine Längsachse an der Aufnahme angeordnet ist. Die Lagervorrichtung umfasst ferner ein Schalenelement welches, insbesondere in Umfangsrichtung gesehen, eine der Aufnahme zugewandte Außenseite und eine dem Querbalken zugewandte Innenseite aufweist. Des Weiteren ist zwischen der Innenseite und dem Querbalken wenigstens ein Ausgleichkörper angeordnet, mittels dem der Querbalken drehfest mit der Lagervorrichtung, insbesondere dem Schalenelement, verbunden ist.

Problematisch bei einer derartig ausgeführten Arbeitsmaschine ist unter anderem die Art und Weise wie der Tragrahmen, insbesondere die Lagervorrichtung, mit dem Querbalken gekoppelt ist. Eine Ausführungsvariante, bei der der Ausgleichkörper, insbesondere ausschließlich, nach Art eines Formschlusses mit dem Querbalken verbunden ist, ist durch das damit einhergehende und/oder notwendige Spiel zwischen der Lagervorrichtung, insbesondere dem Ausgleichkörper, und dem Querbalken besonders nachteilig. Dies führt insbesondere bei Last-Wechsel und/oder -Schwankungen zu besonders hohen, insbesondere zusätzlichen, Belastungen der Lagervorrichtung und/oder des Querbalkens, was sich wiederrum negativ auf die Betriebssicherheit der Arbeitsmaschine auswirkt. Eine weitere Ausführungsvariante, bei der der Ausgleichkörper stoffschlüssig, insbesondere nach Art einer Schweißverbindung, mit dem Querbalken verbunden ist, ist aufgrund mangelnder Anpassungsfähigkeit hinsichtlich der, insbesondere axialen, Position an der der Ausgleichskörper mit dem Querbalken verbunden ist nachteilig. Ein nachträgliches Anpassen einer Relativposition des Querbalkens zum Tragrahmen der Arbeitsmaschine ist hierbei garnicht mehr oder nur mit erheblichem Aufwand möglich.

Die der Erfindung zugrunde liegende Aufgabe besteht somit darin, eine Arbeitsmaschine so zu gestalten, dass die beschriebenen Nachteile zumindest teilweise beseitigt sind. Insbesondere soll dabei eine besonders variable Verbindung zwischen der Lagervorrichtung und dem Querbalken erreicht werden, die gleichzeitig besonders betriebssicher ist.

Diese Aufgabe wird erfindungsgemäß dadurch gelöst, dass das Schalenelement und der Ausgleichkörper derart ausgebildet sind, dass die Lagervorrichtung, insbesondere das Schalenelement und/oder der Ausgleichkörper, in einem montierten Zustand, insbesondere kraftschlüssig und/oder nach Art einer Klemmverbindung, mit dem Querbalken verspannt ist.

In Folge dieser Maßnahme ist die Lagervorrichtung, insbesondere der Ausgleichkörper, zumindest nahezu spielfrei und dabei weiterhin reversibel und/oder zerstörungsfrei mit dem Querbalken verbindbar oder verbunden. Je nach benötigter und/oder beabsichtigter Position der Reihen entlang der Nutzfläche und/oder der dazu zugeordneten reihenbezogenen Arbeitswerkzeuge, die bevorzugt in einer Mehrzahl am Querbalken angeordnet sind, kann der Querbalken somit in axialer Richtung und/oder entlang seiner Längsachse relativ zur Aufnahme gesehen umpositioniert werden. Hierzu sind der Ausgleichskörper und der verbaute Querbalken vor oder während einem Arbeitsvorgang voneinander lösbar und, insbesondere axial, gegeneinander verschiebbar. Bei einer beispielsweise zum Tragrahmen fest vorgegebenen Position der Aufnahme und damit der Lagervorrichtung, sind der Querbalken und damit insbesondere die Arbeitswerkzeuge weiterhin in der Position, Lage und/oder Ausrichtung zum Tragrahmen in einfacher Weise anpassbar. Dies erlaubt eine einfache Anpassung des Querbalkens und damit insbesondere der Arbeitswerkzeuge an die Gegebenheiten bzw. den Bedarf der Nutzfläche, womit eine besonders hohe Flexibilität der Arbeitsmaschine erreicht ist.

Der Ausgleichkörper ist bevorzugt mit wenigstens einer seiner Seiten unmittelbar am Schalenelement und mit wenigstens einer anderen Seite unmittelbar am Querbalken anliegend angeordnet und dabei dazu eingerichtet, Größen- und/oder Formtoleranzen zwischen dem Querbalken und der Lagervorrichtung, insbesondere dem Schalenelement, auszugleichen. Dies erlaubt, bei variierenden Querbalken, die sich hinsichtlich ihrer Größe und/oder Formen untereinander unterscheiden, die Lagervorrichtung durch einen Austausch der Ausgleichkörper trotz variierender Querbalken zumindest im Wesentlichen wieder zu verwenden bzw. beizubehalten. Diese Ausführungsform ist besonders kostengünstig und/oder einfach in der Montage. Weiterhin entspricht eine Kontur bzw. Form auf einer Seite des Ausgleichkörpers zumindest im Wesentlichen einer Kontur bzw. Form des Schalenelements, während eine andere Kontur bzw. Form auf einer anderen Seite des Ausgleichkörpers zumindest im Wesentlichen einer Kontur bzw. Form des Querbalkens entspricht. Hierdurch können sich die Aufnahme und der daran anzuordnende Querbalken in der Größe und/oder Form unterscheiben, da dieser Unterschied durch den Ausgleichkörper ausgeglichen wird.

In einer bevorzugten Ausführungsform sind der Ausgleichkörper und/oder das Schalenelement zumindest teilweise aus einem metallischen Material, insbesondere aus Stahl und/oder aus einer vorteilhaften Legierung, beispielsweise Kupferlegierungen oder dergleichen, ausgebildet. Alternativ oder zusätzlich können der Ausgleichkörper und/oder das Schalenelement zumindest teilweise aus einem, insbesondere faserverstärkten, Kunststoffmaterial ausgebildet sein. Ferner sind alternativ oder zusätzlich auch Kombinationen von unterschiedlichen Werkstoffpaarungen denkbar, bei denen der Ausgleichkörper und das Schalenelement zumindest teilweise aus unterschiedlichen Materialien ausgebildet sind.

In einer alternativen oder zusätzlichen Ausführungsform kann der Ausgleichkörper einteilig und/oder aus mehreren untereinander fest verbundenen Ausgleichkörpern ausgebildet sein. Der Ausgleichkörper ist jedoch besonders bevorzugt mehrteilig, insbesondere zweiteilig und/oder halbschalenförmig, ausgebildet und wird erst während der Montage am Querbalken zum ganzen Ausgleichkörper zusammengesetzt. Somit ist kein Auffädeln des Ausgleichkörpers auf dem Querbalken notwendig. Weiterhin sind das Schalenelement und der Ausgleichkörper hierbei vorzugsweise derart ausgebildet, dass beim Montieren und/oder während dem montierten Zustand eine zumindest im Wesentlichen senkrecht zur Längsachse des Querbalkens gerichtete Radialkraft in den Ausgleichkörper eingeleitet und/oder bewirkt wird. Der Ausgleichkörper ist hierbei ferner bevorzugt dazu eingerichtet, zwischen dem Querbalken und der Aufnahme des Tragrahmens resultierende Kräfte und/oder Drehmomente zumindest teilweise zu übertragen.

In einer bevorzugten Ausführungsform der erfindungsgemäßen Arbeitsmaschine sind das Schalenelement, insbesondere entlang der Innenseite, und der Ausgleichkörper, insbesondere entlang einer äußeren Kontaktfläche, zumindest teilweise konisch ausgebildet. Durch diese Ausgestaltung können Form-, Lage- und/oder Größentoleranzen zwischen der Lagervorrichtung, insbesondere dem Schalenelement und dem Ausgleichkörper, und dem Querbalken in besonders einfacher Weise ausgeglichen werden. Im verbauten Zustand liegt hierbei wenigstens eine jeweilige Kontaktfläche des Schalenelementes, die von der Innenseite gebildet ist, zumindest teilweise an wenigstens einer dazu zugeordneten Kontaktfläche des Ausgleichkörpers an. Das Schalenelement und der Ausgleichkörper sind vorzugsweise form- und/oder kraftschlüssig, insbesondere nach Art einer Klemmverbindung, miteinander verbunden, wobei zwischen der Innenseite des Schalenelements und der Kontaktfläche des Ausgleichkörpers eine Umfangskraft und/oder ein Drehmoment übertragbar ist. Der Ausgleichkörper ist besonders bevorzugt rotationssymmetrisch und/oder nach Art eines Konus, vorzugsweise Kegel- und/oder Kegelstumpfförmig, ausgebildet, wobei insbesondere die dem Schalenelement zugewandte Kontaktfläche den äußeren Umfang des Ausgleichkörpers bildet. Ferner bevorzugt sind hierbei die Innenseite des Schalenelements und die Kontaktfläche des Ausgleichkörpers in ihrer Form und/oder ihren Abmessungen zumindest abschnittsweise korrespondierend zueinander ausgebildet, wobei sowohl die Innenseite des Schalenelements als auch des Ausgleichkörpers umlaufend ausgeführt sind.

In einer Weiterbildung der erfindungsgemäßen Arbeitsmaschine ist innerhalb der Lagervorrichtung eine zumindest im Wesentlichen zur Längsachse des Querbalkens korrespondierende, insbesondere einstellbare, Axialkraft generierbar, wobei die Lagervorrichtung, insbesondere das Schalenelement und/oder der Ausgleichkörper, dazu eingerichtet ist, die Axialkraft zumindest teilweise in eine in etwa senkrecht zur Axialkraft gerichteten Radialkraft umzuwandeln, und wobei die Lagervorrichtung, insbesondere der Ausgleichkörper, in Abhängigkeit der Radialkraft mit dem Querbalken verspannt ist. Desto größer hier die eingeleitete und/oder eingestellte Axialkraft ist, umso höher ist dabei die umgewandelte Radialkraft und damit die Anpresskraft mit der der Ausgleichkörper mit dem Schalenelement und/oder dem Querbalken verspannt ist. Bevorzugt ist eine am Schalenelement ausgebildete erste Anpressfläche die zu einer von einer am Ausgleichkörper ausgebildeten zweiten Anpressfläche abgewandt, insbesondere gegenüberliegend, angeordnet ist, wobei die jeweiligen Stirnseiten der Anpressflächen zumindest im Wesentlichen senkrecht zur Längsachse des Querbalkens ausgerichtet sind. Die Axialkraft wird vorzugsweise manuell von einem Bediener eingeleitet und/oder eingestellt.

In einer anderen bevorzugten Ausführungsform der erfindungsgemäßen Arbeitsmaschine umfasst die Lagervorrichtung zumindest eine sich durch das Schalenelement und/oder den Ausgleichkörper erstreckende Spanneinrichtung, welche wenigstens eine seitlich von außen am Schalenelement und/oder Ausgleichkörper angeordnete Spannscheibe und wenigstens einen Spannkörper aufweist, wobei die Axialkraft mittels der Spanneinrichtung generierbar und/oder einstellbar ist. Die Spanneinrichtung umfasst hierbei bevorzugt wenigstens eine, insbesondere gemeinsame, Spannscheibe, einen Spannkörper, der insbesondere nach Art einer Schraubenmutter ausgebildet ist, und wenigstens ein längliches Element, das insbesondere nach Art einer Schraube ausgebildet ist. Das längliche Element ist im eingebauten Zustand durch das Schalenelement und den Ausgleichkörper ragend angeordnet. Die Spannscheibe ist vorzugsweise mehreren Spannkörpern und/oder länglichen Elementen zugeordnet. Darüber hinaus ist die Spannscheibe vorzugsweise zwischen der Aufnahme des Tragrahmens und dem Schalenelement der Lagervorrichtung angeordnet. Weiterhin ist die Spannscheibe bevorzugt dazu eingerichtet, die Lagervorrichtung und damit den Querbalken in axialer Richtung gesehen an der Aufnahme des Tragrahmens zu sichern und/oder zu halten. Besonders bevorzugt ist wenigstens eine erste Spannscheibe seitlich von außen am Spannelement und wenigstens eine zweite Spannscheibe seitlich von außen am Ausgleichkörper angeordnet. Die Spannscheiben sind somit dazu eingerichtet, die eingeleitete und/oder einleitbare Axialkraft aufzunehmen und/oder an die jeweiligen Anpressflächen und damit an das Schalenelement und den Ausgleichkörper zu übertragen. Über die wenigstens eine Spannscheibe kann die Axialkraft besonders gleichmäßig auf die zugeordnete Anpressfläche eingeleitet werden, was für die Betriebssicherheit besonders vorteilhaft ist.

Außerdem ist eine erfindungsgemäße Arbeitsmaschine bevorzugt, bei welcher der Ausgleichkörper, insbesondere entlang einer äußeren Kontaktfläche, wenigstens eine, insbesondere schlitz- oder stufenartige, Senke und das Schalenelement, insbesondere entlang der Innenseite, wenigstens eine der Senke zugeordnete Erhebung, insbesondere nach Art einer Rippe oder Stufe, aufweist, wobei der Ausgleichkörper und das Schalenelement über die Senken und die dazu zugeordnete Erhebung, insbesondere in Umfangsrichtung gesehen, formschlüssig miteinander verbunden sind. Besonders bevorzugt werden die zwischen dem Schalenelement und dem Ausgleichkörper eingeleiteten und/oder resultierenden Kräfte und/oder Drehmomente zumindest teilweise sowohl zwischen der Innenseite des Schalenelements und der Kontaktfläche des Ausgleichkörpers als auch zwischen der Senke und der dazu zugeordneten Erhebung übertragen. Durch einen derartig ausgebildeten Formschluss sind das Schalenelement und der Ausgleichkörper, insbesondere bei Überlastung und/oder Überwindung der zwischen der Innenseite und der Kontaktfläche ausgeführten Klemmverbindung, weiterhin drehfest miteinander verbunden. Besonders bevorzugt sind entlang des Ausgleichkörpers mehrere Senken und entlang des Schalenelements mehrere den jeweiligen Senken zugeordnete Erhebungen ausgebildet. Bei einer alternativen oder zusätzlichen Ausführungsform, bei der der Ausgleichkörper mehrteilig und/oder halbschalenförmig ausgebildet ist, sind die Erhebungen in Drehrichtung und/oder Umfangsrichtung gesehen zumindest teilweise zwischen zwei Teilen und/oder Segmenten des Ausgleichkörpers angeordnet.

Darüber hinaus weist der Ausgleichkörper bevorzugt in Umfangsrichtung gesehen wenigstens einen dem Querbalken zugewandten Innenumfang auf, der im verbauten Zustand unmittelbar und zumindest abschnittsweise an dem Querbalken angelegt ist.

In einer bevorzugten Weiterbildung der erfindungsgemäßen Arbeitsmaschine ist entlang des Innenumfangs wenigstens eine Ausnehmung ausgebildet, wobei der Innenumfang zumindest nahezu ausschließlich außerhalb der wenigstens einen Ausnehmung an dem Querbalken angelegt ist. Hierbei weist der Ausgleichkörper entlang seines Innenumfangs und/oder seiner Innenkontur wenigstens einen Abschnitt auf der an einer Außenkontur des Querbalkens und/oder unmittelbar am Querbalken anliegt, während an andere Abschnitt, der entlang der Ausnehmung ausgebildet ist, berührungsfrei zur Außenkontur des Querbalkens angeordnet ist. Vorzugsweise weist der Ausgleichkörper entlang des Innenumgangs bzw. der Innenkontur mehrere derartiger Ausnehmungen auf, die im verbauten und/oder zusammengesetzten Zustand mit dem Querbalken nicht in Berührung stehen. Bei einem bevorzugt als Mehrkantprofil, insbesondere als Vierkant, ausgebildeten Querbalken ist die wenigstens eine Ausnehmung bevorzugt zwischen, insbesondere mittig, zwischen zwei, vorzugsweise abgerundeten, Ecken des Querbalken angeordnet. Somit werden die Anpresskräfte und/oder Drehmomente zumindest im Wesentlichen über Abschnitte eingeleitet und/oder übertragen, die im Bereich der jeweiligen Ecken und/oder angrenzend an den jeweiligen Ecken des Querbalkens angeordnet sind. Diese Ausführungsform macht sich die Erkenntnis zu Nutze, dass der Querbalken im Bereich der Ecken eine höhere Stabilität aufweist bzw. höher beansprucht werden kann. Durch diese Maßnahme ist die Betriebssicherheit in besonders einfacher Weise noch weiter gesteigert.

Ferner bevorzugt ist dem Querbalken wenigstens ein Aktor zum zumindest teilweisen Verdrehen und/oder Verschwenken des Querbalkens zugeordnet. Der Aktor ist dabei vorzugsweise fernbetätigbar.

In einer weiteren bevorzugten Ausführungsform der erfindungsgemäßen Arbeitsmaschine ist der Aktor, insbesondere mittels wenigstens einer Hebeleinrichtung, über die zumindest eine Lagervorrichtung mit dem Querbalken koppelbar. Besonders bevorzugt sind der Aktor und/oder eine mit dem Aktor verbundene Hebeleinrichtung unmittelbar mit der Lagervorrichtung verbunden. Hierdurch können die Kräfte und/oder das Drehmoment zum Verdrehen und/oder Verschwenken des Querbalkens direkt in die Lagervorrichtung eingeleitet und/oder übertragen werden. Andererseits entfallen somit aus dem Stand der Technik bekannte Anlenkpunkte am Querbalken zum Verbinden des Aktors. Diese Maßnahme ist für die Anpassung der Position, Lage und/oder Ausrichtung des Querbalkens relativ zum Tragrahmen und/oder der Nutzfläche besonders vorteilhaft. Der Aktor und/oder die Hebeleinrichtung sind ferner bevorzugt mit dem Schalenelement und/oder mit der Spanneinrichtung, insbesondere der Spannscheibe, verbunden.

Weitere Einzelheiten der Erfindung sind der Beispielsbeschreibung und den Zeichnungen zu entnehmen. Die Zeichnungen zeigen
- Fig.1: eine landwirtschaftliche Arbeitsmaschine in einer Arbeitsstellung und in perspektivischer Ansicht von vorne;
- Fig.2: eine erfindungsgemäße Lagerung eines mit der landwirtschaftlichen Arbeitsmaschine gekoppelten Querbalkens in perspektivischer Ansicht;
- Fig.3: eine erfindungsgemäße Lagervorrichtung in einer Schnittansicht von vorne;
- Fig.4: einzelne Komponenten der Lagervorrichtung aus der Fig.3 in vergrößerter Schnittansicht;
- Fig.5: die Lagervorrichtung aus der Fig.3 und der Querbalken in einer seitlichen Ansicht; und
- Fig.6: eine beispielhafte weitere Ausführungsform von einzelnen Komponenten der erfindungsgemäßen Lagervorrichtung.

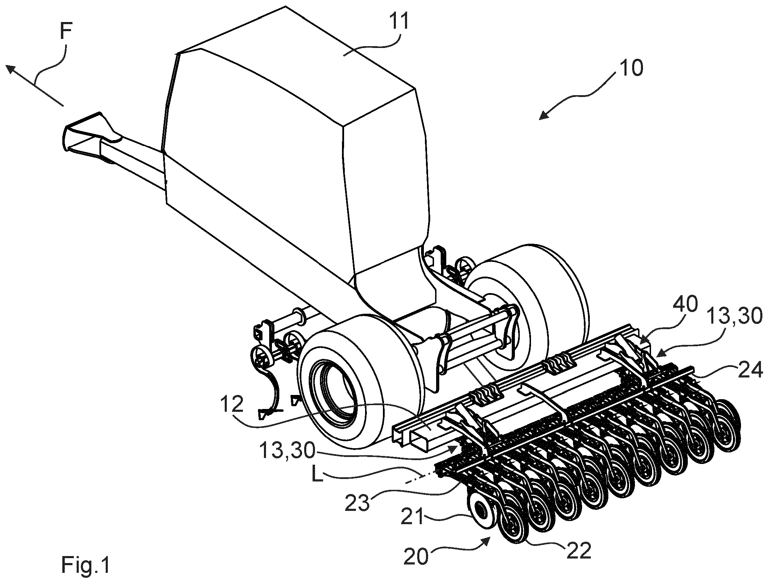

Eine beispielhaft als gezogene Sämaschine ausgebildete landwirtschaftliche Arbeitsmaschine 10 ist in der Fig.1 gezeigt. Die Arbeitsmaschine 10 umfasst hierbei einen zentralen Vorratsbehälter 11 zum Vorhalten von Verteilgut, insbesondere Saatgut und/oder Düngemittel, welches über wenigstens ein in den Figuren nicht gezeigtes pneumatisches Fördersystem zu mehreren quer zu einer Fahrtrichtung F nebeneinander angeordneter Arbeitswerkzeuge 20 zubringbar ist. Die Arbeitswerkzeuge 20 sind in einer gesenkten Arbeitsstellung gezeigt und beispielhaft als Säscharanordnungen ausgebildet, die jeweils wenigstens ein Furchenöffnungselement 21, insbesondere Scheibenschar, und wenigstens ein Tiefenführungselement 22, insbesondere eine Tiefenführungs- und/oder Andruckrolle, umfassen. Alternativ oder zusätzlich kann einem jeweiligen Arbeitswerkzeuge 20 auch wenigstens eine Vorrichtung zum Schließen der Furche zugeordnet sein. Die Arbeitsmaschine 20 ist mittels der Arbeitswerkzeuge 20 dazu eingerichtet, dass Verteilgut bedarfsgerecht auf der landwirtschaftlichen Nutzfläche, insbesondere innerhalb einer dafür vorgesehenen Furche, abzulegen.

Es sei hier nochmal explizit darauf hingewiesen, dass die gezeigte Ausführungsform der Arbeitsmaschine 10 nur beispielhaft ist und alternativ oder zusätzlich auch als Bodenbearbeitungswerkzeuge, beispielsweise als Grubber, ausgebildete Arbeitswerkzeuge 20 umfassen kann. Darüber hinaus kann die Arbeitsmaschine 10 alternativ auch als landwirtschaftliche Bodenbearbeitungsmaschine ausgebildet sein.

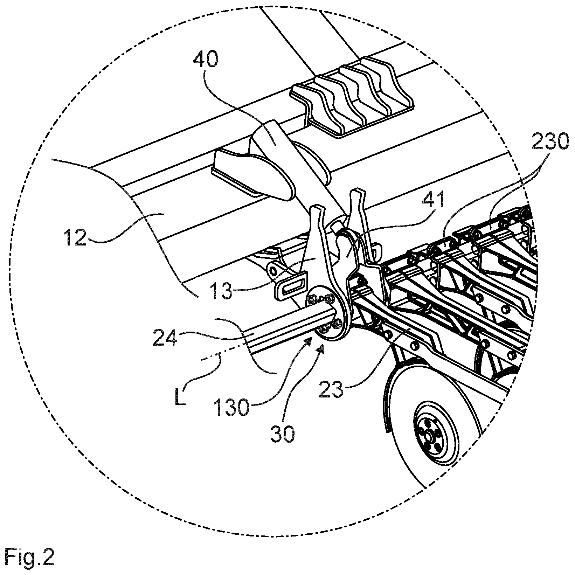

Die Kopplung der Arbeitswerkzeuge 20 mit der Arbeitsmaschine 10 ist in der näheren Ansicht in Fig.2 zu erkennen. Demnach weist die Arbeitsmaschine 10 einen Maschinenrahmen 12 auf, dem ein, insbesondere nach Art eines Längsträgers ausgeführter, Tragrahmen 13 mit einer Aufnahme 130 zugeordnet ist. Der Tragrahmen 13 ist hierbei beispielhaft mit dem Maschinenrahmen 12 verbunden. Alternativ oder zusätzlich kann der Tragrahmen 13 auch Teil des Maschinenrahmens 12 und/oder in diesen integriert sein. Der Tragrahmen 13 ist mittels der Aufnahme 130 dazu eingerichtet, wenigstens einen zumindest im Wesentlichen quer zur Fahrtrichtung F ausgerichteten Querbalken 24 aufzunehmen. Die Arbeitsmaschine 10 umfasst hierbei ferner zumindest eine, insbesondere der Aufnahme 130 zugeordnete und mehrteilige, Lagervorrichtung 30, mittels der der Querbalken 24 verdrehbar um seine Längsachse L an der Aufnahme 130 angeordnet ist. Die jeweiligen Arbeitswerkzeuge 20 sind jeweils über einen Lenker 23 und eine Überlastsicherung 230 an dem Querbalken 24 angelenkt.

Dem Querbalken 24 ist weiterhin wenigstens ein Aktor 40 zugeordnet, der dazu eingerichtet ist, den Querbalken 24 und damit die Arbeitswerkzeuge 20 zumindest teilweise zu verdrehen und/oder zu verschwenken. Somit können die Arbeitswerkzeuge 20 zumindest teilweise, insbesondere fernbetätigt, mittels des Aktors 40 in ihrer Höhe, Lage und/oder Ausrichtung zum Tragrahmen 13 und/oder der Nutzfläche verstellt werden. Beispielsweise lassen sich die Arbeitswerkzeuge 20 somit in einstellbarer Weise zwischen wenigstens zwei unterschiedlichen Stellungen, insbesondere einer Arbeits- und Transportstellung, und/oder auf unterschiedlichen Eindringtiefen in den Boden verbringen.

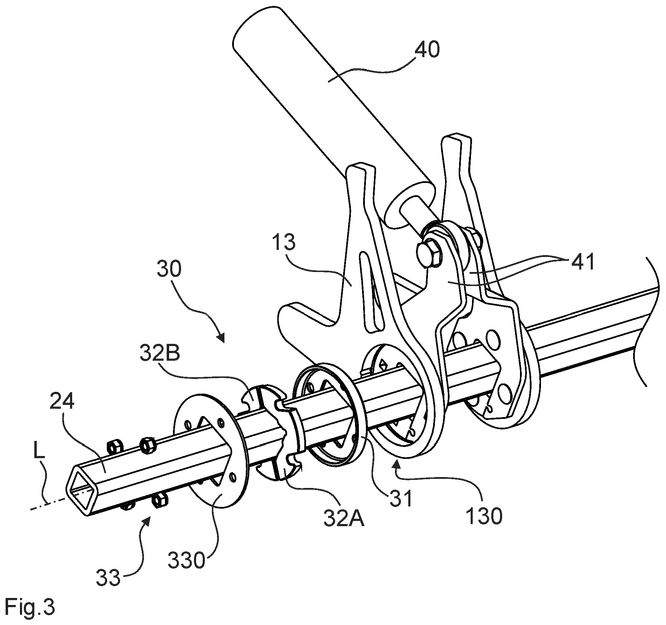

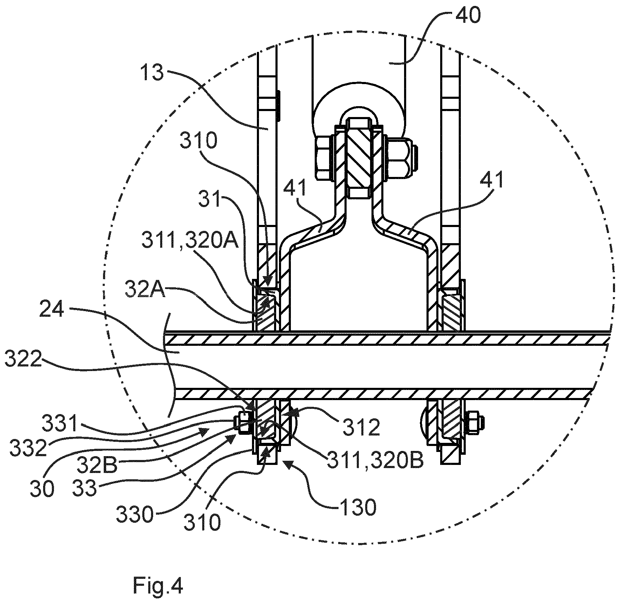

Die Fig.3 und Fig.4 zeigen die Lagervorrichtung 30 in vergrößerter Ansicht. Demnach umfasst die Lagervorrichtung 30 wenigstens ein, insbesondere einteiliges, Schalenelement 31, welches, insbesondere in Umfangsrichtung gesehen, eine der Aufnahme 130 zugewandte Außenseite 310 und eine dem Querbalken 24 zugewandte Innenseite 311 aufweist. Alternativ zum gezeigten Ausführungsbeispiel kann das Schalenelement 31 auch mehrteilig auf zumindest zwei Halbschalen ausgebildet sein. Zwischen der Innenseite 311 des Schalenelements 21 und dem Querbalken 24 ist außerdem ein, insbesondere mehrteiliger und/oder halbschalenförmiger, Ausgleichkörper 32A, 32B angeordnet, mittels dem der Querbalken 24 drehfest mit der Lagervorrichtung 30, insbesondere dem Schalenelement 31, verbunden ist.

Das Schalenelement 31 und der Ausgleichkörper 32A, 32B sind hierbei derart ausgebildet, dass die Lagervorrichtung 30, insbesondere das Schalenelement 31 und/oder der Ausgleichkörper 32A, 32B, in einem montierten Zustand, insbesondere kraftschlüssig und/oder nach Art einer Klemmverbindung, mit dem Querbalken 24 verspannt ist.

Zum Montieren der Lagervorrichtung 30 wird das Schalenelement 31 auf den Querbalken 24 bis zur Aufnahme 130 aufgefädelt und/oder entlang des Querbalkens 24 geschoben. Der Ausgleichkörper 32A, 32B wird vor oder nach dem Auffädeln und/oder Aufschieben in das Schalenelement 31 eingesetzt.

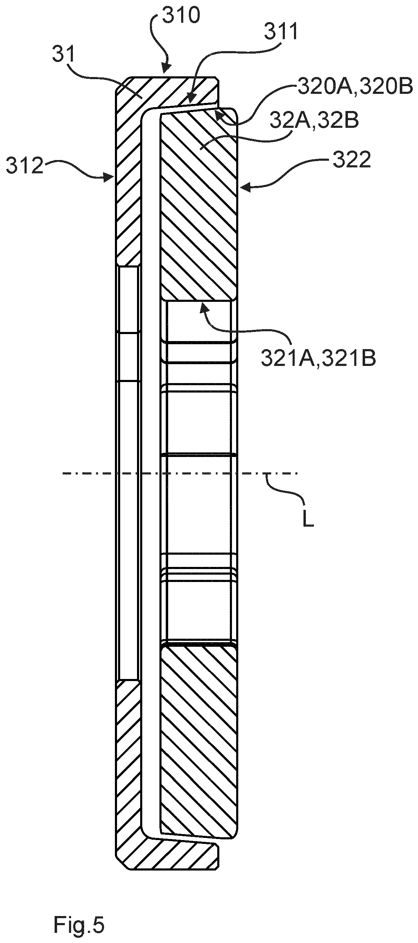

Des Weiteren sind, wie in der Fig.4 und Fig.5 gut zu sehen, das Schalenelement 31, insbesondere entlang der Innenseite 311, und der Ausgleichkörper 32A, 32B, insbesondere entlang einer äußeren Kontaktfläche 320A, 320B, zumindest teilweise und/oder abschnittsweise konisch ausgebildet. Die Innenseite 331 des Schalenelements 31 und die Kontaktfläche 320A, 320B des Ausgleichkörpers 32A, 32B sind hierbei korrespondierend zueinander ausgeführt und kraftschlüssig derart miteinander verbunden, dass zwischen der Innenseite 311 und der Kontaktfläche 320A, 320B eine Umfangskraft und/oder ein Drehmoment übertragbar ist.

Um das Schalenelement 31 und den Ausgleichkörper 32A, 32B kraftschlüssig miteinander zu verbinden und dabei die Lagervorrichtung 30 mit dem Querbalken 24 zu verspannen, ist innerhalb der Lagervorrichtung 30 eine zumindest im Wesentlichen zur Längsachse L des Querbalkens 24 korrespondierende, insbesondere einstellbare, Axialkraft generierbar. Diese Axialkraft wird mittels einer durch das Schalenelement 31 und/oder den Ausgleichkörper 32A, 32B erstreckende Spanneinrichtung 33, welche wenigstens eine seitlich von außen am Schalenelement 31 und/oder Ausgleichkörper 32A, 32B angeordnete Spannscheibe 330 und wenigstens einen Spannkörper 331 aufweist, manuell eingestellt und/oder eingeleitet. Die Spanneinrichtung 33 umfasst hierbei ferner ein längliches Element 332, wobei das längliche Element 332 beispielhaft als Schraube und der Spannkörper 331 als Schraubenmutter ausgeführt sind. Die Spannscheibe 330 ist insbesondere einteilig ausgebildet und einer Mehrzahl von Spannkörpern 331 und länglichen Elementen 332 zugeordnet. Alternativ hierzu kann die Spannscheibe 330 auch Mehrteilig ausgeführt sein, wobei die Einzelteile der Spannscheibe 330 dabei insbesondere puzzelartig miteinander verbunden und/oder verbindbar sind.

Darüber hinaus sind das Schalenelement 31 und/oder der Ausgleichkörper 32A, 32B dazu eingerichtet, die Axialkraft zumindest teilweise in eine in etwa senkrecht zur Axialkraft gerichtete Radialkraft umzuwandeln. Die Lagervorrichtung 30, insbesondere der Ausgleichkörper 32A, 32B, wird in Abhängigkeit der Größe der Radialkraft mit dem Querbalken 24 verspannt und damit kraftschlüssig mit dem Querbalken 24 verbunden. Hierbei gilt, desto größer die eingeleitete und/oder eingestellte Axialkraft ist, umso höher ist dabei die umgewandelte Radialkraft und damit die Anpresskraft mit der der Ausgleichkörper 32A, 32B mit dem Schalenelement 31 und/oder dem Querbalken 24 verspannt ist. Um die Axialkraft möglichst gleichmäßig und/oder großflächig einzuleiten und/oder zu übertragen, ist am Schalenelement 31 eine erste Anpressfläche 312 und am Ausgleichkörper 32A, 32B eine dazu abgewandt angeordnete zweite Anpressfläche 322 ausgebildet. Die jeweiligen Stirnseiten der Anpressflächen 312, 322 sind zumindest im Wesentlichen senkrecht zur Längsachse L des Querbalkens 24 angeordnet, wobei die Spannscheibe 330 an der zweiten Anpressfläche 322 des Ausgleichkörpers 32 anliegend angeordnet ist. Die Spannscheibe 330 ist hierbei ferner dazu eingerichtet, die Lagervorrichtung 30 und damit den Querbalken 24 in wenigstens eine axiale Richtung an der Aufnahme 130 des Tragrahmens 13 zu sichern und/oder zu halten.

Wie ebenfalls in der Fig.4 gut zu erkennen ist, ist der Aktor 40, insbesondere mittels wenigstens einer Hebeleinrichtung 41, über die zumindest eine Lagervorrichtung 30 mit dem Querbalken 24 gekoppelt. Hierzu ist die Aktor 40, insbesondere mittels der Hebeleinrichtung 41, unmittelbar mit der Lagervorrichtung 30, insbesondere mittels der Spanneinrichtung 33 mit dem Schalenelement 31, verbunden. Somit können Querbalken 24 mit der Arbeitsmaschine 20 gekoppelt werden, die frei von zusätzlichen Anlenkpunkten und/oder Aufnahmen sind und somit relativ zum Tragrahmen 13 und/oder der Nutzfläche gesehen besonders flexibel anbringbar sind.

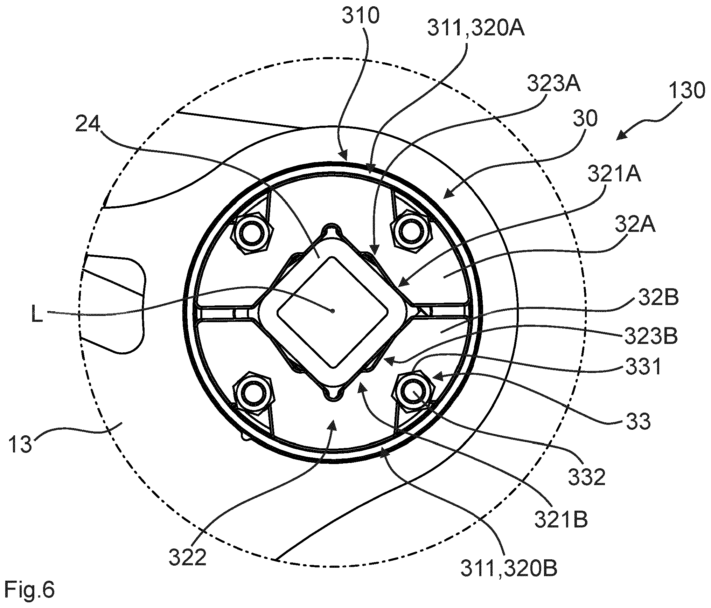

In der Fig.6 ist bei ausgeblendeter Spannscheibe 330 zu sehen, dass der Ausgleichkörper 32A, 32B in Umfangsrichtung gesehen wenigstens einen dem Querbalken 24 zugewandten Innenumfang 321A, 321B aufweist. Im verbauten Zustand ist der Innenumfang 321A, 321B zumindest abschnittsweise an dem Querbalken 24, insbesondere an dem Außenumfang bzw. der Außenkontur des Querbalkens 24, anliegend angeordnet. Entlang des Innenumfangs 321A, 321B ist wenigstens eine Ausnehmung 323A, 323B ausgebildet, so dass der Innenumfang 321A, 321B zumindest nahezu ausschließlich außerhalb der wenigstens einen Ausnehmung 323A, 323B an dem Querbalken 24 angelegt ist. Die hierbei beispielhaft gezeigte Ausführungsform zeigt eine Mehrzahl von Ausnehmungen 323A, 323B die entlang des Innenumfangs 321A, 321B ausgebildet sind, wobei die Ausnehmungen 323A, 323B jeweils zumindest in etwa mittig zwischen zwei Ecken entlang der Außenkontur des beispielhaft als Vierkantrohr ausgebildeten Querbalkens 24 angeordnet sind. Diese vorteilhafte Ausführungsform trägt dazu bei, dass die in die Lagervorrichtung 30 einleitbaren und/oder übertragbaren Anpresskräfte und/oder Drehmomente zumindest im Wesentlichen über Abschnitte eingeleitet und/oder übertragen, die im Bereich der jeweiligen Ecken und/oder angrenzend an den jeweiligen Ecken des Querbalkens 24 angeordnet sind.

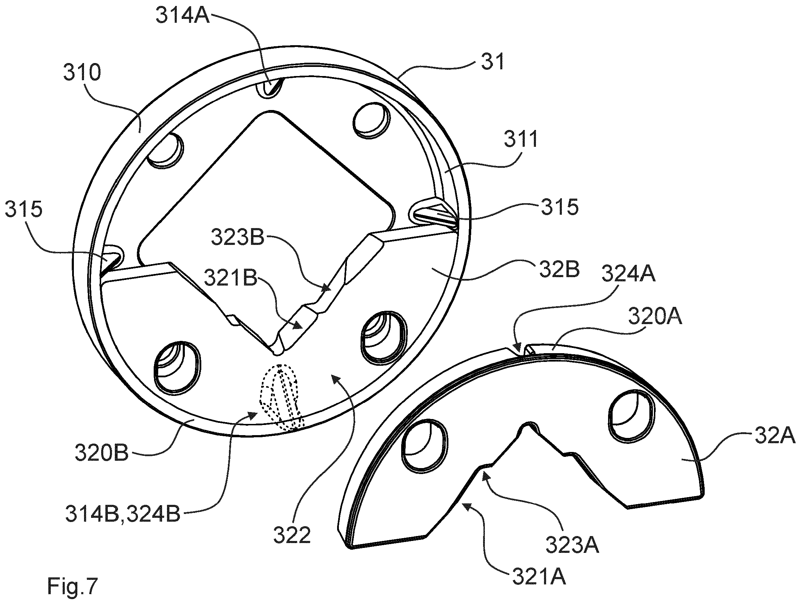

Fig.7 zeigt ein weiteres Ausführungsbeispiel des erfindungsgemäßen Schalenelements 31 und des Ausgleichkörpers 32. Der Ausgleichkörper 32A, 32B weist, insbesondere entlang seiner äußeren Kontaktfläche 320A 320B, wenigstens eine, insbesondere schlitz- oder stufenartige, Senke 324A, 324B auf. An dem Schalenelement 31 ist eine zu der Senke 324A, 324B zugeordnete und/oder korrespondierende Erhebung 314A, 314B, insbesondere nach Art einer Rippe oder Stufe, ausgebildet. Der Ausgleichkörper 32A, 32B und das Schalenelement 31 sind über die jeweiligen aneinander anliegenden und/oder ineinander greifenden Senken 324A, 324B und Erhebung 314A, 314B formschlüssig und/oder kraftübertragend miteinander verbunden. Die Senken 324A, 324B und Erhebung 314A, 314B sind, insbesondere bei Überlastung und/oder Überwindung des Kraftschlusses entlang der Kontaktfläche 320A, 320B und der Innenseite 311, dazu eingerichtet, die in die Lagervorrichtung 30 einleitbaren Kräfte und/oder Drehmomente zumindest teilweise zu übertragen. Darüber hinaus können wie in der Fig.7 dargestellt, weitere Erhebungen 315 angeordnet sein, die bei einem mehrteilig ausgeführten Ausgleichkörper 32A, 32B im verbauten Zustand zwischen einem ersten und zweiten Ausgleichkörperelement angeordnet sind.

### Bezugszeichenliste

- 10: landwirtschaftliche Arbeitsmaschine
- 11: Vorratsbehälter
- 12: Maschinenrahmen
- 13: Tragrahmen
- 130: Aufnahme
- 20: Arbeitswerkzeug
- 21: Furchenöffnungselemente
- 22: Tiefenführungselement
- 23: Lenker
- 230: Überlastsicherung
- 24: Querbalken
- 30: Lagervorrichtung
- 31: Schalenelement
- 310: Außenseite
- 311: Innenseite
- 312: erste Anpressfläche
- 314A, 314B: Erhebung
- 315: weitere Erhebung
- 32A, 32B: Ausgleichkörper
- 320A, 320B: Kontaktfläche
- 321A, 321B: Innenumfang
- 322: zweite Anpressfläche
- 323A, 323B: Ausnehmung
- 324A, 324B: Senke
- 33: Spanneinrichtung
- 330: Spannscheibe
- 331: Spannkörper, Schraubenmutter
- 332: längliches Element, Schraube
- 40: Aktor
- 41: Hebeleinrichtung
- F: Fahrtrichtung
- L: Längsachse des Querbalkens

## Patentansprüche

1. Landwirtschaftliche Arbeitsmaschine (10), insbesondere Sä- und/oder Bodenbearbeitungsmaschine, umfassend
- zumindest einen der Arbeitsmaschine (10) zugeordneten Tragrahmen (13) mit wenigstens einer Aufnahme (130) für wenigstens einen zumindest im Wesentlichen quer zu einer Fahrtrichtung (F) der Arbeitsmaschine (10) ausgerichteten Querbalken (24),
- sowie zumindest eine, insbesondere mehrteilige, Lagervorrichtung (30) über die der Querbalken (24) zumindest teilweise verdrehbar um seine Längsachse (L) an der Aufnahme (130) angeordnet ist,
wobei die Lagervorrichtung (30) zumindest ein Schalenelement (31) umfasst, welches, insbesondere in Umfangsrichtung gesehen, eine der Aufnahme (130) zugewandte Außenseite (310) und eine dem Querbalken (24) zugewandte Innenseite (311) aufweist, wobei zwischen der Innenseite (311) und dem Querbalken (24) wenigstens ein Ausgleichkörper (32A, 32B) angeordnet ist, mittels dem der Querbalken (24) drehfest mit der Lagervorrichtung (30), insbesondere dem Schalenelement (31), verbunden ist, **dadurch gekennzeichnet, dass** das Schalenelement (31) und der Ausgleichkörper (32A, 32B) derart ausgebildet sind, dass die Lagervorrichtung (30), insbesondere das Schalenelement (31) und/oder der Ausgleichkörper (32A, 32B), in einem montierten Zustand kraftschlüssig und/oder nach Art einer Klemmverbindung mit dem Querbalken (24) verspannt ist.

2. Arbeitsmaschine (10) nach Anspruch 1, **dadurch gekennzeichnet, dass** das Schalenelement (31), insbesondere entlang der Innenseite (311), und der Ausgleichkörper (32A, 32B), insbesondere entlang einer äußeren Kontaktfläche (320A, 320B), zumindest teilweise konisch ausgebildet sind.

3. Arbeitsmaschine (10) nach Anspruch 2, **dadurch gekennzeichnet, dass** innerhalb der Lagervorrichtung (30) eine zumindest im Wesentlichen zur Längsachse (L) des Querbalkens (24) korrespondierende, insbesondere einstellbare, Axialkraft generierbar ist, wobei die Lagervorrichtung (30), insbesondere das Schalenelement (31) und/oder der Ausgleichkörper (32A, 32B), dazu eingerichtet ist, die Axialkraft zumindest teilweise in eine in etwa senkrecht zur Axialkraft gerichteten Radialkraft umzuwandeln, und wobei die Lagervorrichtung (30), insbesondere der Ausgleichkörper (32A, 32B), in Abhängigkeit der Radialkraft mit dem Querbalken (24) verspannt ist.

4. Arbeitsmaschine (10) nach Anspruch 3, **dadurch gekennzeichnet, dass** die Lagervorrichtung (30) zumindest eine sich durch das Schalenelement (31) und/oder den Ausgleichkörper (32A, 32B) erstreckende Spanneinrichtung (33) umfasst, welche wenigstens eine seitlich von außen am Schalenelement (31) und/oder Ausgleichkörper (32A, 32B) angeordnete Spannscheibe (330) und wenigstens einen Spannkörper (331) aufweist, wobei die Axialkraft mittels der Spanneinrichtung (33) generierbar und/oder einstellbar ist.

5. Arbeitsmaschine (10) nach zumindest einem der vorgenannten Ansprüche 1 bis 4, **dadurch gekennzeichnet, dass** der Ausgleichkörper (32A, 32B), insbesondere entlang einer äußeren Kontaktfläche (320A, 320B), wenigstens eine, insbesondere schlitz- oder stufenartige, Senke (324A, 324B) und das Schalenelement (31), insbesondere entlang der Innenseite (311), wenigstens eine der Senke (324A, 324B) zugeordnete Erhebung (314A, 314B), insbesondere nach Art einer Rippe oder Stufe, aufweist, wobei der Ausgleichkörper (32A, 32B) und das Schalenelement (31) über die Senken (324A, 324B) und die dazu zugeordnete Erhebung (314A, 314B), insbesondere in Umfangsrichtung gesehen, formschlüssig miteinander verbunden sind.

6. Arbeitsmaschine (10) nach zumindest einem der vorgenannten Ansprüche 1 bis 5, wobei der Ausgleichkörper (32A, 32B) in Umfangsrichtung gesehen wenigstens einen dem Querbalken (24) zugewandten Innenumfang (321A, 321B) aufweist, der im verbauten Zustand unmittelbar und zumindest abschnittsweise an dem Querbalken (24) angelegt ist, **dadurch gekennzeichnet, dass** entlang des Innenumfangs (321A, 321B) wenigstens eine Ausnehmung (323A, 323B) ausgebildet ist; und der Innenumfang (321A, 321B) zumindest nahezu ausschließlich außerhalb der wenigstens einen Ausnehmung (323A, 323B) an dem Querbalken (24) angelegt ist.

7. Arbeitsmaschine (10) nach zumindest einem der vorgenannten Ansprüche 1 bis 6, wobei dem Querbalken (24) wenigstens ein Aktor (40) zum zumindest teilweisen Verdrehen und/oder Verschwenken des Querbalkens (24) zugeordnet ist, **dadurch gekennzeichnet, dass** der Aktor (40), insbesondere mittels wenigstens einer Hebeleinrichtung (41), über die zumindest eine Lagervorrichtung (30) mit dem Querbalken (24) koppelbar ist.

## Claims

1. Agricultural work machine (10), in particular sowing and/or soil-cultivating machine, comprising
- at least one support frame (13) assigned to the work machine (10) having at least one receptacle (130) for at least one crossbeam (24) aligned at least substantially transversely to a direction of travel (F) of the work machine (10),
- and at least one bearing device (30), in particular a multipart bearing device, via which the crossbeam (24) is arranged on the receptacle (130) so as to be at least partially rotatable about its longitudinal axis (L),
the bearing device (30) comprising at least one shell element (31) which, in particular viewed in the circumferential direction, has an outer side (310) facing the receptacle (130) and an inner side (311) facing the crossbeam (24), at least one compensating body (32A, 32B) being arranged between the inner side (311) and the crossbeam (24), by means of which body the crossbeam (24) is connected to the bearing device (30), in particular the shell element (31), in a rotationally fixed manner, **characterized in that** the shell element (31) and the compensating body (32A, 32B) are designed such that the bearing device (30), in particular the shell element (31) and/or the compensating body (32A, 32B), is clamped to the crossbeam (24) in a force-fit manner and/or in the manner of a clamping connection in an assembled state.

2. Work machine (10) according to claim 1, **characterized in that** the shell element (31), in particular along the inner side (311), and the compensating body (32A, 32B), in particular along an outer contact surface (320A, 320B), are at least partially conical in shape.

3. Work machine (10) according to claim 2, **characterized in that** within the bearing device (30) an axial force, in particular adjustable and corresponding at least substantially to the longitudinal axis (L) of the crossbeam (24), can be generated, the bearing device (30), in particular the shell element (31) and/or the compensating body (32A, 32B), being configured to convert the axial force at least partially into a radial force directed approximately perpendicular to the axial force, and the bearing device (30), in particular the compensating body (32A, 32B), being clamped to the crossbeam (24) depending on the radial force.

4. Work machine (10) according to claim 3, **characterized in that** the bearing device (30) comprises at least one clamping apparatus (33) extending through the shell element (31) and/or the compensating body (32A, 32B), which apparatus has at least one clamping disk (330) arranged laterally from the outside on the shell element (31) and/or compensating body (32A, 32B) and at least one clamping body (331), the axial force being generatable and/or adjustable by means of the clamping apparatus (33).

5. Work machine (10) according to at least one of the preceding claims 1 to 4, **characterized in that** the compensating body (32A, 32B), in particular along an outer contact surface (320A, 320B), has at least one, in particular slot- or step-like, depression (324A, 324B) and the shell element (31), in particular along the inner side (311), has at least one raised portion (314A, 314B) associated with the depression (324A, 324B), in particular in the manner of a rib or step, the compensating body (32A, 32B) and the shell element (31) being form-fittingly interconnected via the depressions (324A, 324B) and the associated raised portion (314A, 314B), in particular viewed in the circumferential direction.

6. Work machine (10) according to at least one of the preceding claims 1 to 5, the compensating body (32A, 32B), viewed in the circumferential direction, having at least one inner circumference (321A, 321B) facing the crossbeam (24), which circumference in the installed state is directly and at least partially positioned on the crossbeam (24), **characterized in that** along the inner circumference (321A, 321B) at least one recess (323A, 323B) is formed; and the inner circumference (321A, 321B) is positioned at least almost exclusively outside the at least one recess (323A, 323B) on the crossbeam (24).

7. Work machine (10) according to at least one of the preceding claims 1 to 6, at least one actuator (40) for at least partially rotating and/or pivoting the crossbeam (24) being assigned to the crossbeam (24), **characterized in that** the actuator (40), in particular by means of at least one lever apparatus (41), can be coupled to the crossbeam (24) via the at least one bearing device (30).

## Revendications

1. Machine de travail (10) agricole, en particulier semoir et/ou machine pour le travail du sol, comprenant
- au moins un cadre porteur (13) associé à la machine de travail (10) et comportant au moins un logement (130) pour au moins une barre transversale (24) orientée au moins sensiblement transversalement à une direction de déplacement (F) de la machine de travail (10),
- ainsi qu'au moins un dispositif formant palier (30), en particulier en plusieurs parties, par l'intermédiaire duquel la barre transversale (24) est disposée sur le logement (130) de manière à pouvoir tourner au moins partiellement autour de son axe longitudinal (L),
dans laquelle le dispositif formant palier (30) comprend au moins un élément formant coque (31) qui, vu en particulier dans la direction circonférentielle, présente un côté extérieur (310) tourné vers le logement (130) et un côté intérieur (311) tourné vers la barre transversale (24), dans laquelle au moins un corps de compensation (32A, 32B) est disposé entre le côté intérieur (311) et la barre transversale (24), au moyen duquel la barre transversale (24) est reliée de manière solidaire en rotation au dispositif formant palier (30), en particulier à l'élément formant coque (31), **caractérisée en ce que** l'élément formant coque (31) et le corps de compensation (32A, 32B) sont conçus de telle sorte que le dispositif formant palier (30), en particulier l'élément formant coque (31) et/ou le corps de compensation (32A, 32B), est serré par adhérence et/ou à la manière d'une liaison par serrage contre la barre transversale (24) dans un état monté.

2. Machine de travail (10) selon la revendication 1, **caractérisée en ce que** l'élément formant coque (31), en particulier le long du côté intérieur (311), et le corps de compensation (32A, 32B), en particulier le long d'une surface de contact extérieure (320A, 320B), sont au moins partiellement coniques.

3. Machine de travail (10) selon la revendication 2,
**caractérisée en ce qu'**une force axiale, en particulier réglable, correspondant au moins sensiblement à l'axe longitudinal (L) de la barre transversale (24) peut être générée à l'intérieur du dispositif formant palier (30), dans laquelle le dispositif formant palier (30), en particulier l'élément formant coque (31) et/ou le corps de compensation (32A, 32B), est conçu pour convertir au moins partiellement la force axiale en une force radiale orientée à peu près perpendiculairement à la force axiale, et dans laquelle le dispositif formant palier (30), en particulier le corps de compensation (32A, 32B), est serré contre la barre transversale (24) en fonction de la force radiale.

4. Machine de travail (10) selon la revendication 3, **caractérisée en ce que** le dispositif formant palier (30) comprend au moins un appareil de serrage (33) s'étendant à travers l'élément formant coque (31) et/ou le corps de compensation (32A, 32B) et qui présente au moins un disque de serrage (330) disposé latéralement de l'extérieur sur l'élément formant coque (31) et/ou le corps de compensation (32A, 32B) et au moins un corps de serrage (331), dans laquelle la force axiale peut être générée et/ou réglée au moyen de l'appareil de serrage (33).

5. Machine de travail (10) selon au moins l'une des revendications précédentes 1 à 4, **caractérisée en ce que** le corps de compensation (32A, 32B) présente, en particulier le long d'une surface de contact extérieure (320A, 320B), au moins une dépression (324A, 324B), en particulier en forme de fente ou de gradin, et l'élément formant coque (31) présente, en particulier le long du côté intérieur (311), au moins un bossage (314A, 314B) associé à la dépression (324A, 324B), en particulier à la manière d'une nervure ou d'un gradin, dans laquelle le corps de compensation (32A, 32B) et l'élément formant coque (31) sont reliés l'un à l'autre par complémentarité de formes par l'intermédiaire des dépressions (324A, 324B) et du bossage (314A, 314B) qui leur est associé, en particulier vu dans la direction circonférentielle.

6. Machine de travail (10) selon au moins l'une des revendications précédentes 1 à 5, dans laquelle le corps de compensation (32A, 32B) présente, vu dans la direction circonférentielle, au moins une circonférence intérieure (321A, 321B) tournée vers la barre transversale (24) et qui, à l'état monté, est appliquée directement et au moins dans certaines sections contre la barre transversale (24), **caractérisée en ce qu'**au moins un évidement (323A, 323B) est réalisé le long de la circonférence intérieure (321A, 321B) ; et la circonférence intérieure (321A, 321B) est appliquée au moins presque exclusivement à l'extérieur de l'au moins un évidement (323A, 323B) contre la barre transversale (24).

7. Machine de travail (10) selon au moins l'une des revendications précédentes 1 à 6, dans laquelle au moins un actionneur (40) est associé à la barre transversale (24) pour faire tourner et/ou pivoter au moins partiellement la barre transversale (24), **caractérisée en ce que** l'actionneur (40) peut être accouplé à la barre transversale (24), en particulier au moyen d'au moins un appareil de levage (41), par l'intermédiaire de l'au moins un dispositif formant palier (30).
